(19) Europäisches Patentamt
European Patent Office
Office européen des brevets

(11) **EP 1 436 920 B1**

(12) **EUROPEAN PATENT SPECIFICATION**

(45) Date of publication and mention
of the grant of the patent:
**27.04.2005 Bulletin 2005/17**

(51) Int Cl.[7]: **H04B 10/18**

(21) Application number: **01976629.4**

(22) Date of filing: **28.09.2001**

(86) International application number:
**PCT/IT2001/000499**

(87) International publication number:
**WO 2003/030412 (10.04.2003 Gazette 2003/15)**

(54) **OPTICAL TRANSMISSION SYSTEM COMPRISING DISPERSION MANAGEMENT SYSTEM**

OPTISCHES ÜBERTRAGUNGSSYSTEM MIT DISPERSIONSVERWALTUNGSSYSTEM

SYSTEME DE TRANSMISSION OPTIQUE COMPRENANT UN SYSTEME DE GESTION DE LA DISPERSION

(84) Designated Contracting States:
**AT BE CH CY DE DK ES FI FR GB GR IE IT LI LU MC NL PT SE TR**

(43) Date of publication of application:
**14.07.2004 Bulletin 2004/29**

(73) Proprietor: **Pirelli & C. S.p.A.**
**20123 Milano (IT)**

(72) Inventors:
• **CARBONE, Fabrizio**
**I-15060 Pasturana (IT)**
• **SOCCI, Luciano**
**I-20126 Milano (IT)**
• **ROMAGNOLI, Marco**
**I-20121 Milano (IT)**
• **TONELLO, Alessandro**
**I-31015 Conegliano (IT)**

(74) Representative: **Giannesi, Pier Giovanni**
**Pirelli S.p.A.**
**Direzione Proprietà Industriale**
**Viale Sarca, 222**
**20126 Milano (IT)**

(56) References cited:
**EP-A- 0 987 583** **WO-A-00/49742**
**WO-A-97/20403** **US-A- 5 365 362**

• **BREUER D ET AL: "UPGRADING STRATEGIES FOR 40 GBIT/S SINGLE-CHANNEL TRANSMISSION WITHIN THE EMBEDDED STANDARD FIBRE NETWORK" ARCHIV FUR ELEKTRONIK UND UBERTRAGUNGSTECHNIK, S.HIRZEL VERLAG. STUTTGART, DE, vol. 50, no. 5, 1 September 1996 (1996-09-01), pages 310-315, XP000638587 ISSN: 0001-1096**
• **PINA J ET AL: "Periodically conjugated solitons in dispersion-managed optical fiber" OPTICS COMMUNICATIONS, NORTH-HOLLAND PUBLISHING CO. AMSTERDAM, NL, vol. 176, no. 4-6, April 2000 (2000-04), pages 397-407, XP004194312 ISSN: 0030-4018 cited in the application**
• **MARHIC M E ET AL: "CANCELLATION OF THIRD-ORDER NONLINEAR AFFECTS IN AMPLIFIED FIBER LINKS BY DISPERSION COMPENSATION, PHASE CONJUGATION, AND ALTERNATING DISPERSION" OPTICS LETTERS, OPTICAL SOCIETY OF AMERICA, WASHINGTON, US, vol. 20, no. 8, 15 April 1995 (1995-04-15), pages 863-865, XP000499605 ISSN: 0146-9592**

**Description**

The present invention relates to the transmission of solitons on optical fibres with alternate sign dispersion.

In optical communication systems solitons represent a promising technique for the transmission of information over long distances. An optical soliton is a type of optical pulse which can be propagated along an optical fibre and which retains its waveform unchanged. Chromatic dispersion plays an important part in the creation and propagation of solitons. This varies the velocity of the spectral components of an optical pulse in relation to optical frequency, and causes deformation of the pulse's time profile. Balancing between the chromatic dispersion of the optical fibre and the self phase modulation (hereinafter "SPM") makes it possible to preserve on average the waveform of an optical soliton even when losses are present. This regime is commonly known as the "average soliton regime".

Below the term "dispersion" refers either to chromatic dispersion D or to the group velocity dispersion $\beta_2$ (or GVD), which is related to the chromatic dispersion D by the following relationship:

$$\beta_2 = -\frac{\lambda^2}{2\pi c}D$$

where $\lambda$ is the central wavelength of the pulse and c is the speed of light in vacuum.

A soliton transmission system can operate in a reliable way if the solitons reach the receiver within the bit time assigned to them. However some physical mechanisms induce deviations in the position of the soliton with respect to its initial position, which is normally at the centre of the bit time. These deviations are generally referred to in the literature by the term "jitter". For example, Gordon-Haus jitter is due to noise introduced by the spontaneous emission of optical amplifiers. For optical systems which use wavelength division multiplexing (WDM) the use of solitons may be hindered by the jitter introduced by collisions between solitons having different wavelengths. In addition to this, soliton/soliton interactions may occur even in the absence of noise due to the amplifiers and with solitons of a single wavelength because of the fact that the soliton pulses are "packed" very close to each other. These interactions cause true "attractions" or "repulsions" between adjacent solitons, with a "force" which greatly depends on the separation between the solitons and their relative phase. These interactions too are therefore a source of jitter.

Techniques such as those summarised by G.P. Agrawal in his book "Fiber-optic Communication Systems", Wiley-Interscience Publication by John Wiley & Sons, Inc., (1997), chapter 10, have been suggested in order to improve the propagation characteristics of solitons.

The use of decreasing dispersion optic fibres (DDF), having a GVD which decreases (in absolute value) exponentially in a longitudinal direction, has for example been proposed in order to compensate for the reduction in SPM experienced by a soliton as the result of attenuation losses during propagation along the optical fibre. A technique for creating a DDF fibre comprises reducing the diameter of the core of the fibre in the longitudinal direction in a controlled way during the drawing process. The change in the diameter of the core of the optical fibre in fact changes the contribution of waveguide dispersion to the total dispersion.

It has also been suggested that the exponential profile of a DDF can be approximated using a stepped profile, joining together optical fibres having constant dispersion but with values which differ from each other.

The technique of phase conjugation has also been suggested for reducing jitter in average soliton regime. In particular, reduction of jitter derives from spectral inversion of the soliton pulses induced by phase conjugation. The same technique is also of benefit in systems which use optical fibres of the DDF type.

In general, under the average soliton regime, the lower the dispersion of the optical fibres used at the operating wavelength, the lower the average power required and the lower the jitter. On the other hand, if the operating wavelength is close to the wavelength at which the dispersion of the optical fibre is cancelled out (zero dispersion wavelength) other factors can worsen the performance of the system. For example, four-wave mixing (FWM) can arise in a WDM system. The so-called "dispersion management" (DM) technique can be a solution in this case. This technique consists in using segments of optical fibre with dispersion of alternate sign joined together in accordance with a particular "dispersion map". The average dispersion of an optical path can then be kept sufficiently low, at the same time keeping local dispersion at a value which is sufficiently high to drastically reduce the occurrence of FWM. In a simple known embodiment a relatively short segment of dispersion compensating optical fibre (DCF) having a normal (that is negative) dispersion D is periodically alternated with longer segments of optical fibre having an anomalous (i.e. positive) dispersion, typically close to the optical signal amplifiers. If the launch characteristics of the pulses (shape, power, etc.) are suitably chosen, these pulses can propagate in such a system with a "quasi-soliton" dynamics. In more detail, because of the behaviour of the dispersion, the power, the width and shape of the pulses oscillate periodically along the optical path, and therefore substantially recover the original launch characteristics at the end of each span which includes positive and negative dispersion optical fibres. Thus, through periodical sampling, at the end of each span of positive and negative dispersion fibre it is possible to find pulses which have substantially the same shape, the same peak power, the same width, etc. This regime differs from the average soliton regime in that in the latter the characteristics of the pulses can possibly be subject to slight variations as a result of losses, while in the case of a system having alternate sign dispersion optical fibres there are substantial changes in the characteristics of the pulses as a result of the behaviour of the dispersion. In the remainder of this description this "quasi-soliton" dynamics will be indicated by the terms "DM soliton dynamics". The reduction in average dispersion which can be obtained by alternating optical fibres of opposite sign makes it possible to obtain very low levels of jitter for DM solitons.

The article by J. Piña, B. Abueva, C.G.Goedde, "Periodically conjugated solitons in dispersion-managed optical fibre", Optics Communications, 176 (2000), pages 397-407, describes an analysis of long distance propagation for short optical solitons ($\tau \sim 0.5$ ps) in a non-linear optical fibre which incorporates the effects of periodic phase conjugation and dispersion management. The analysis includes higher order effects such as Raman self-frequency shift (SFRS), third order dispersion and non-linear dispersion. Periodic phase conjugation compensates GVD, SPM and SFRS. According to the authors, stable pulse propagation results from balancing the third order dispersion and the non-linear dispersion. Suitable choice of the dispersion map makes it possible to avoid perturbations due to linear losses. The effects due to frequency conversion of the phase conjugators are not mentioned in the treatise.

The Applicant notes that the authors' analysis assumes in all cases that phase conjugation takes place after each amplifier located at the end of a period of the dispersion map (that is of a span comprising optical fibres of alternate sign). This represents a considerable increase in the cost of a transmission system. Also, in the examples mentioned in the article cited above, the ratio $\beta_{21}/d_0$ between the GVD of an optical fibre used and the average GVD of the system is kept below 5 and the ratio between the GVDs of the two optical fibres $\beta_{22}/\beta_{21}$ is kept below 4 (as an absolute value). By choosing a typical value of $d_0$ = -0.1 ps$^2$/km (which is chosen by those authors) very low dispersion values are obtained for the optical fibres used in the system, which are not suitable for transmission of the WDM type because such low local dispersion values can give rise to the occurrence of FWM.

An additional problem which must be borne in mind when creating a WDM system arises from the dependence of the optical fibres' dispersion on wavelength. Even in a DM soliton system this problem is significant. In fact, because the optical fibres in the DM soliton system depend on wavelength with a slope which is generally not zero, different channels each experience different local dispersion and different average dispersion. At high bit rates (> 10 Gbit/s) these differences can destroy the soliton dynamics for some channels having a wavelength which differs greatly from an "optimum" wavelength for which the dispersion map of the system is designed.

K. Suzuki, H. Kubota and M. Nakazawa, in the article "1 Tb/s (40 Gb/s × 25 channel) DWDM quasi-DM soliton transmission over 1,500 km using dispersion-managed single-mode fibre and conventional C-band EDFAs", Technical Digest Series Conference Edition, OFC2001, TuN7, describes a soliton transmission experiment carried out using a line manufactured using a single mode fibre (SMF) and dispersion compensating fibres having a reversed dispersion slope (RDF). In detail, the transmission line consisted of a loop comprising 5 spans of optical fibres separated by erbium C-band optical fibre amplifiers. Each span consisted of 30 km of SMF fibre and 20 km of RDF fibre. The average dispersion was between +0.02 and +0.06 ps/nm/km for the signal wavelengths (25 channels from 1542.14 to 1561.42 nm, with a spacing of 100 GHz) and the slope of the average dispersion was less than 0.005 ps/nm$^2$/km. After transmission over 1500 km all the channels had a BER of less than $1 \times 10^{-9}$, each channel consisting of four signals modulated at 10 Gb/s. The power penalty after 1500 km was typically 2.0 dB.

According to the Applicant, the use of RDF fibre which is capable of simultaneously compensating for dispersion and the dispersion slope at such a high level, while making it possible to obtain useful results such as those reported above, may not represent an ideal solution. In fact, these fibres, having special dispersion characteristics, are rather complex to make and therefore very costly. In addition to this, in already installed systems this arrangement would require the replacement of all the DCF fibres in the system with a further considerable increase in costs.

The Applicant faced the problem of creating a WDM system with DM solitons in particular for high transmission speeds (> 10 Gbit/s) without the need to use reversed slope dispersion compensating optical fibres. More particularly, the Applicant faced the problem of how to succeed in maintaining a DM soliton dynamics for pulses propagating along an optical path comprising optical fibres having dispersion of alternate sign arranged in accordance with a dispersion map designed so as to be optimum in order to produce a DM soliton dynamics at a predetermined wavelength $\lambda_c$, these pulses having a wavelength $\lambda_1$ which is different from such predetermined wavelength.

The Applicant has found that this problem can be solved by converting the wavelength of these pulses between $\lambda_1$ and a second wavelength $\lambda_2$ one or more times along the optical path in such a way that $\lambda_2$ is on the opposite side from $\lambda_1$ with respect to $\lambda_c$, preferably in such a way that $(\lambda_1 + \lambda_2)/2$ is substantially equal to $\lambda_c$.

A device which is suitable for this wavelength conversion may be a phase conjugation device, which has the advantage of performing the wavelength conversion in a completely optical way without the need to convert electrically the signal. The Applicant has however found that because this device performs an operation of conjugating the pulse phases, that is acts on one of the most important characteristics of the DM soliton pulses, this can give rise to distortions which are likely to compromise the soliton dynamics. The Applicant therefore faced the problem of verifying compatibility between a dispersion map comprising optical fibres having alternate sign dispersion suitable for the transmission DM solitons having rather high local dispersion so as to reduce the occurrence of FWM, and a phase conjugation device.

The Applicant has found that this problem can be solved by placing the phase conjugation device in the system at or close to the points where the chirp of the pulses is substantially cancelled out. Advantageously the dispersion map can be designed in such a way as to make these points correspond to amplification sites located along the system.

In a first aspect thereof the invention relates to a method of transmitting optical pulses along an optical path comprising optical fibres having dispersion of alternate sign arranged in accordance with a dispersion map which is suitable for the transmission of quasi-solitons at a wavelength $\lambda_c$, the said method comprising the steps of:

- launching at least a first optical pulse RZ having a first wavelength $\lambda_1$ which is different from $\lambda_c$ on a first portion of the said optical path,

- modifying the wavelength of at least the said first pulse at the end of the said first portion of optical path in such a way as to obtain a second optical pulse RZ having a second wavelength $\lambda_2$ such that $\lambda_2$ is on the opposite side from $\lambda_1$ with respect to $\lambda_c$,

- launching the said second pulse on a second portion of the said optical path.

Preferably, the said step of modifying the wavelength is carried out in such a way that $(\lambda_1 + \lambda_2)/2$ is substantially equal to $\lambda_c$.

The said step of modifying the wavelength may further comprise a step of inverting the spectrum of the first optical pulse RZ. This spectral inversion step is performed along the optical path in a chirp cancellation portion.

Preferably the method according to the invention further comprises the step of amplifying the said first optical pulse before the step of modifying the wavelength of the said first optical pulse.

In a second aspect thereof the invention relates to an optical transmission system comprising optical fibres having dispersion of alternate sign arranged in an optical path in accordance with a dispersion map which is suitable for the transmission of quasi-solitons at a wavelength $\lambda_c$;

a transmission station and a receiver station connected to respective ends of said optical path, the said transmission station being capable of launching on the said optical path at least a first optical pulse RZ having a wavelength $\lambda_1$ which is different from $\lambda_c$; and

at least one wavelength conversion device, located along the said optical path, capable of modifying the wavelength of at least the said first pulse of wavelength $\lambda_1$ in such a way as to obtain a second pulse of wavelength $\lambda_2$ such that $\lambda_2$ is on the opposite side from $\lambda_1$ with respect to $\lambda_c$.

Preferably the said second wavelength $\lambda_2$ is such that $(\lambda_1 + \lambda_2)/2$ is substantially equal to $\lambda_c$.

Preferably the said conversion device is a phase conjugation device. This phase conjugation device is located along the said optical path in a chirp cancellation portion.

Typically the said optical path comprises at least one amplifier. Advantageously the said conversion device is located at an amplifier.

In accordance with a preferred embodiment the said optical fibres having dispersion of alternate sign have a dispersion which is greater than or equal to 1 ps/(nm km) in absolute value.

Preferably the said dispersion map comprises spans having at least three segments of optical fibre.

Preferably the said optical path has a slope of the average dispersion of less than 0.08 ps/(nm$^2$ km).

The said first pulse may have a normal average dispersion on the said first portion of optical path.

Further features and advantages of this invention will be better understood from the following detailed description of some of its preferred embodiments described below with reference to the appended drawings, in which:

- Figure 1 shows diagrammatically a first embodiment of the optical transmission system according to the invention,

- Figure 2 shows diagrammatically a behaviour of the average dispersion of an optical path in a certain wavelength band,

- Figure 3 shows diagrammatically an alternate dispersion map,

- Figure 4 shows diagrammatically wavelength conversion performed by a phase conjugation device,

- Figure 5 shows the evolution of the duration of a pulse of the DM-soliton type within a span for a first embodiment of a dispersion map,

- Figure 6 shows the evolution of the chirp of the said pulse along the same span,

- Figure 7 shows the evolution of the shape of the said pulse along the same span,

- Figure 8 shows the evolution of the shape of the said pulse after 50 spans, sampled at the end of each span,

- Figure 9 shows the evolution of the duration of a pulse within a span for a second embodiment of a dispersion map,

- Figure 10 shows the evolution of the chirp of the said pulse along the same span,

- Figure 11 shows the evolution of the shape of a pulse having optimum launch conditions for a third embodiment of a dispersion map,

- Figure 12 shows the evolution of the shape of a pulse having launch conditions which are not optimum for the same dispersion map,

- Figure 13 shows the evolution of the shape of a pulse having launch conditions which are not optimum for the same dispersion map, which has been subjected to periodical wavelength conversion in accordance with an embodiment of the invention,

- Figure 14 shows a span of a fourth embodiment of a dispersion map,

- Figure 15 shows the behaviour of the average dispersion with respect to wavelength for the dispersion map in Figure 14,

- Figure 16 shows the evolution of chirp for a pulse having characteristics which are optimized for DM-soliton transmission along the dispersion map in Figure 14,

- Figure 17 shows the penalty level versus transmission distance for a first channel which is not optimized for the dispersion map in Figure 14, without wavelength conversion (circles) and with wavelength conversion (triangles),

- Figure 18 shows the penalty level versus transmission distance for a second channel which is not optimized for the dispersion map in Figure 14, without wavelength conversion (circles) and with wavelength conversion (triangles),

- Figure 19 shows the penalty level versus transmission distance for a third channel which is not optimized for the dispersion map in Figure 14, without wavelength conversion (circles) and with wavelength conversion (triangles),

- Figure 20 shows the evolution of the duration of a pulse along a single span of a fifth embodiment of a dispersion map,

- Figure 21 shows the evolution of the chirp for the same pulse along the same single span,

- Figure 22 shows the behaviour of the penalty with respect to transmission distance for a series of simulations performed moving the position of the phase conjugation device,

- Figure 23 shows the same result of Figure 22 on a smaller penalty scale.

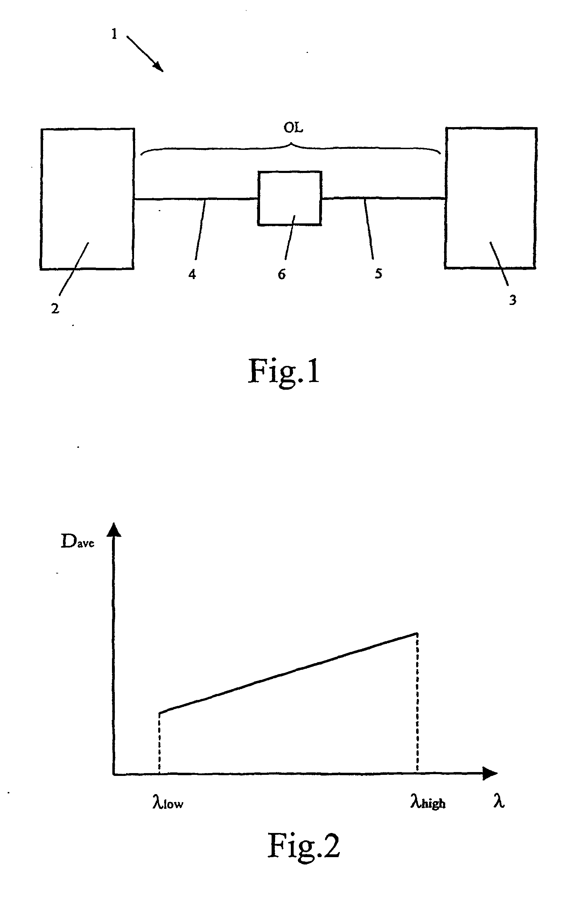

With reference to Figure 1, an optical transmission system 1 according to the invention comprises a transmission station 2 and a receiver station 3 which are connected together by means of an optical path OL. This optical path OL comprises at least a first portion of optical path 4, at least a second portion of optical path 5 and at least one conversion device 6 located between the first and second portions of optical path 4, 5.

Transmission station 2 comprises at least one RZ (return-to-zero) optical pulse transmitter, or advantageously a plurality of transmitters capable of providing a plurality of optical channels having different wavelengths, and a multiplexing device capable of combining the various channels on optical path OL. Here and below in the description, by "plurality" is meant "at least two". Each transmitter typically comprises a laser source which emits a first pulsed optical signal having a certain optical wavelength and a certain bit rate. This first optical signal has no information associated with it, in practice comprising a sequence of substantially identical pulses which are separated from each other by a time distance which depends on the bit rate. Through an external modulator a second signal bearing the information which has to be transmitted is superimposed on the first pulsed signal. The whole of the first and second signals forms the optical channel. In RZ transmission a "1" bit corresponds to the presence of a pulse while a "0" bit corresponds to the absence of a pulse. The pulse associated with bit "1" starts from an amplitude of substantially zero, reaches a maximum and returns to an amplitude of substantially zero. At the transmitter it starts and ends with an amplitude of substantially zero within the bit time. The transmitter may be provided with a phase modulator to add a certain chirp to the pulses transmitted. Alternatively this function may be performed by apiece of optical fibre. Each optical channel transmitted has a certain spectral width (or bandwidth), that is includes different spectral components, i.e. components at different wavelengths, around a central wavelength. For WDM transmission, transmission station 2 comprises at least two laser sources. Typically the wavelength band within which the transmitted channels are included lies around 1550 nm, in the so-called telecommunications, "third window" between approximately 1460 and 1600 nm. Systems which make it possible to extend this band to wavelengths of more than 1600 nm are under investigation. The signals superimposed on the optical carriers have a high bit rate, greater than 10 Gbit/s, preferably greater than or equal to 20 Gbit/s, even more preferably greater than or equal to 4.0 Gbit/s. The set of WDM channels transmitted will be referred as the "WDM optical signal".

The multiplexing device may include a single WDM optical multiplexer which is capable of combining all the channels on optical path OL, or combinations of optical multiplexers organized in such a way as to first to combine together subsets of channels on intermediate optical paths and then such subsets of channels on optical path OL. Examples of optical multiplexers which can be used in the system according to the invention may for example be conventional fused fibre passive couplers or couplers manufactured using planar optics, or WDM multiplexers based on interference phenomena, such as for example an AWG (arrayed waveguide grating).

Transmission station 2 may also comprise an optical transmission pre-amplifier located downstream of the multiplexing device, capable of providing all the channels with a sufficient level of power to overcome the attenuation introduced by at least a first part of optical path OL. This transmission optical pre-amplifier may be for example an erbium-doped optical fibre amplifier.

Receiver station 3 comprises a demultiplexing device capable of separating the WDM optical signal originating from optical path OL into a plurality of optical channels, and a plurality of optical receivers typically corresponding to the channels separated by the demultiplexing device, capable of separating the modulated signal from the optical carrier for each optical channel.

The demultiplexing device may comprise a single WDM optical demultiplexer capable of separating all the channels originating from optical path OL into a corresponding number of optical paths, or combinations of optical demultiplexers organized in such a way as to first separate subsets of channels on intermediate optical paths and then the individual channels from such intermediate optical paths. Examples of optical demultiplexers which can be used in the system according to the invention may for example be conventional passive fused fibre couplers or couplers manufactured using planar optics followed by suitable filters tuned on different channels (e.g. Fabry-Perot filters or fibre-optic gratings), or WDM demultiplexers based on interference phenomena capable of directly separating the different channels, such as for example AWG (arrayed waveguide gratings).

The optical receivers comprise photodetectors capable of converting each optical channel into an electrical signal and extracting the information-bearing signal from that electrical signal. Typically such photodetectors may be conventional photodiodes.

Receiver station 3 may also comprise a receiver optical pre-amplifier located upstream of the demultiplexing device, which is for example capable of reducing the power difference between the different channels introduced by the transmission line. This receiver optical pre-amplifier may be for example an erbium-doped optical fibre amplifier.

The first portion of optical path 4, located between transmission station 2 and conversion device 6 in the embodiment in Figure 1, includes at least a first span comprising segments of optical fibre, typically single mode, having chromatic dispersion of alternate sign arranged according to a certain dispersion map. Typically, the first portion of optical path 4 comprises several spans which are substantially identical to each other arranged in series. The span or spans included in the first portion of the optical path may for example comprise a first segment of optical fibre having positive dispersion in the transmission band and a second segment of optical fibre having negative dispersion in the transmission band, compensating for the dispersion introduced by the first segment. Preferably each span comprises at least three segments of optical fibre optically connected together, one of which has dispersion of opposite sign to that of the other two. Typically, in a wavelength band around 1550 nm the first portion of optical path 4 has an average chromatic dispersion $D_{ave}$ which depends monotonously on wavelength with a certain slope. By "average chromatic dispersion" (or more simply "average dispersion") of an optical path (or a portion of optical path) comprising several segments of optical fibre, each of length $L_i$ and dispersion $D_i(\lambda)$, it is meant $D_{ave}(\lambda) = E\, D_i(\lambda) \cdot L_i\, /\, \Sigma\, L_i$. Figure 2 shows a substantially rectilinear behaviour of $D_{ave}$ versus wavelength in an interval between a wavelength $\lambda_{low}$ and a wave-

length $\lambda_{high}$, for example the ends of the wavelength bands within which the channels transmitted by transmission station 2 lie. For example $\lambda_{low}$ and $\lambda_{high}$ may be 1520 nm and 1570 nm respectively.

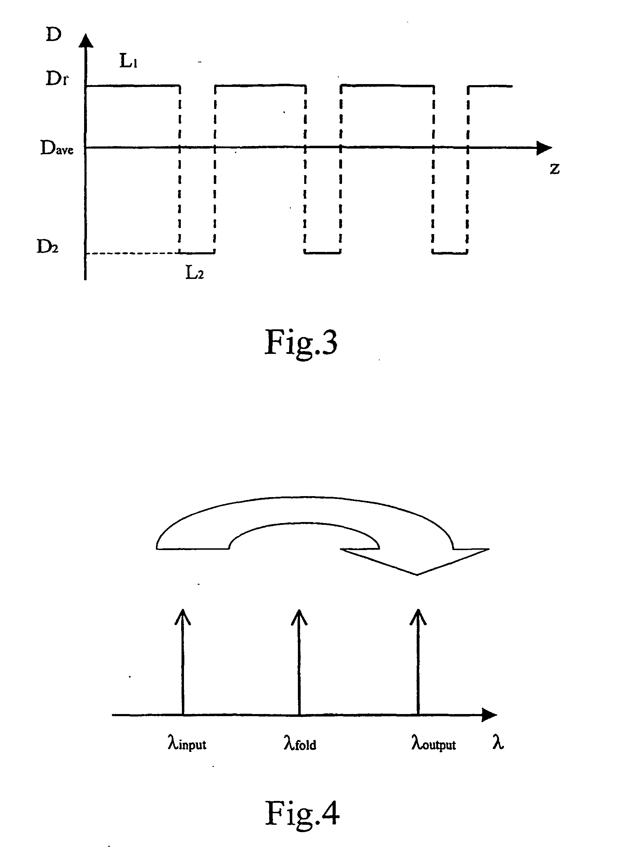

Figure 3 shows diagrammatically a series of alternate dispersion spans comprising two types of optical fibres, one having a positive dispersion $D_1$ and the other a negative dispersion $D_2$, of respective lengths $L_1$ and $L_2$, combined in a suitable way in accordance with a certain substantially periodic dispersion map of period $p = L_1 + L_2$. In the diagram shown in Figure 3, the optical fibre with negative dispersion $D_2$ represents a dispersion compensating DCF fibre, and in the dispersion map $L_1 \gg L_2$. Alternatively the compensation section may comprise dispersion compensators other than DCF fibre, for example those based on fibre optic gratings. The optical fibre having a positive dispersion $D_1$ may for example be a standard single mode optical fibre (SMF) having dispersion lying between approximately 16 ps/(nm·km) and 20 ps/(nm·km) at a wavelength of 1550 nm. Alternatively the optical fibre having positive dispersion may be of the NZD (non-zero dispersion) type, with dispersion of between approximately 1 ps/(nm·km) and 4 ps/(nm·km) at a wavelength of 1550 nm, or an optical fibre of the HDS (half-dispersion-shifted) type having a dispersion which is intermediate between that of an NZD type fibre and a standard fibre. More complex dispersion maps than that shown in Figure 3 may include spans including NZD fibres and SMF (or HDF) fibres alternating with DCF fibres. DCF fibres having a reversed dispersion slope may be used in the transmission system according to the invention to reduce the dependence of average dispersion on wavelength. In order to reduce the occurrence of FWM, the optical fibres included in each span have a dispersion which is greater than or equal to approximately 1 ps/(nm km) in absolute value.

The second portion of optical path 5, located between conversion device 6 and receiver station 3 in the embodiment in Figure 1 includes at least a first span comprising segments of optical fibre, typically single mode, having chromatic dispersion of alternate sign in accordance with a certain dispersion map. Typically the second portion of optical path 5 comprises a plurality of spans arranged in series, which are substantially identical to each other. As far as the types of optical fibres included in the second portion of optical path 5 are concerned, reference should be made to what has already been said in respect of the types of optical fibres included in the first portion of optical path 4. The dispersion map for the second portion of optical path 5 may be substantially identical to the dispersion map for the first part of optical path 4. Substantially identical dispersion maps in the first and second portions of optical path 4, 5 may be obtained by first forming optical path OL between transmission station 2 and receiver station 3 through alternate dispersion optical fibres according to a certain map and then interrupting that optical path OL with the conversion device 6 in the two portions of optical path 4, 5. This technique may be typically and advantageously used in already installed systems comprising optical fibres with alternate dispersion.

Optical path OL typically comprises other devices such as for example amplifiers capable of compensating for attenuation losses introduced by the optical fibres included in optical path OL. Preferably these amplifiers are optical amplifiers, more preferably fibre optic optical amplifiers, and even more preferably erbium-doped optical fibre optical amplifiers. Preferably the amplifiers are located periodically along the optical path at the end of each span comprising optical fibres having alternate dispersion. Alternatively, or in combination with erbium optical fibre amplifiers, optical path OL may include other types of optical amplifiers such as for example distributed or lumped Raman amplifiers.

Conversion device 6 is a device for modifying the central wavelength of the channels transmitted along optical path OL. Preferably conversion device 6 performs wavelength conversion optically, that is without intermediate electronic corrections. A preferred device capable of performing this function without the need for electronically converting the optical signal is a phase conjugation device (OPC), which in addition to changing the wavelength also inverts the spectrum of the converted channels. Preferably the OPC device is a device which is independent of polarization. Preferably it comprises a non-linear means within which the optical channels and at least one linearly polarized pumping radiation complete a double pass, the first in one direction and the second in the opposite direction. On the second pass the optical channels pass through the non-linear means after having undergone a rotation of $\pi/2$ of their polarization state. The polarization state of the pumping radiation instead remains unchanged in the double pass. A device of this type is described, by way of example, in the article by C.R. Giles, V. Mizrahi, T. Erdogan, "Polarization-independent phase conjugation in a reflective optical mixer", IEEE Photonics Technology Letters, Vol. 7, No. 1, pages 126-8 (1995). In general, as shown diagrammatically in Figure 4, an OPC device modifies the wavelength of an input channel $\lambda_{input}$ in such a way that the output channel has a wavelength $\lambda_{output}$ which is folded with respect to a "fold" wavelength $\lambda_{fold}$. The device can operate in the same way if there are several input channels. As is known, the fold wavelength $\lambda_{fold}$ can be essentially the same as the pumping wavelength for some phase conjugation devices (for example for lithium niobate devices or devices based on FWM) or maybe a wavelength corresponding to a "virtual" electromagnetic radiation having a frequency $\omega_{fold}$ which is related to the frequency of the pumping radiation $\omega_{pump}$ in other phase conjugation devices. Typically, in the latter case the frequency $\omega_{fold}$ may be a sub-harmonic of the frequency of the pumping radiation $\omega_{pump}$ (for example $\omega_{pump} = 2\,\omega_{fold}$). Typically the OPC device may comprise one or more devices filtering the residual wavelengths of the non-linear wavelength conversion process.

As an alternative to a phase conjugation device, other types of optical wavelength converters which do not carry out phase conjugation may be used in the transmission system according to the invention, such as for example devices based on semiconductor optical amplifiers (SOA) or FWM. These devices are in fact capable of generating both a first phase conjugated converted signal and a second non-phase-conjugated converted signal, having different wavelengths, through non-linear effects.

Conversion device 6 may comprise one or more device for the amplification of the modified wavelength channels. Preferably conversion device 6 is located along optical path OL at an amplifier in such a way as to make use of an interruption already present in optical path OL. Even more preferably, conversion device 6 is located at the output from a line amplifier.

The use of several conversion devices located along optical path OL may also be provided. In this case a plurality n of conversion devices defines a corresponding plurality n + 1 of portions of optical path. Preferably the conversion devices are located substantially at the same distance from each other.

The functioning of the optical transmission system 1 according to the invention will be illustrated in the remainder of the description. The transmitters included in transmission station 2 are configured in such a way as to provide a series of pulses for each transmitted channel with parameters which are correlated with the dispersion characteristics of optical path OL and such as to guarantee a dynamics of the DM soliton type at least in the first portion of optical path 4. In particular, the profile of the pulses launched at the input to optical path OL can substantially be described by means of the following equation:

$$u(0,t) = \sqrt{P_0} e^{\frac{t^2}{2T_0^2} + iCt^2} \qquad [1]$$

where $P_0$ represents the peak power, $T_0$ is proportional to the half maximum duration

$$T_{FWHM}(T_0 = \frac{T_{FWHM}}{2\sqrt{\ln(2)}}),$$

and C represents the chirp of the pulse launched.

The chirp and duration parameters vary within any span along the optical path because of the chromatic dispersion of the optical fibres used, but if they are selected in a suitable way at the transmitter their evolution is such that at the end of each span they come back substantially the same. In other words, the profile of the pulse at the end of each span of the optical path is always substantially unchanged, that is the pulses have a dynamics of the DM soliton type.

These pulses can be received by the receivers located at receiver station 3, after they have propagated along optical path OL. The receivers are configured in such a way as to perform sampling within a preset bit time, within which the pulses have to be located accurately in order to avoid an increase in receiver penalty, that is loss of information. It therefore becomes important to minimize during propagation those phenomena which can give rise to jitter at the receiver, such as collisions, interactions, amplifier noise, etc.

Simulation of the evolution of the shape of a pulse as it propagates along the optical path, as the evolution of its parameters, can be obtained by known methods, such as for example the reduced variational method (MVR) described for example in the articles by Y. Kodama, "Nonlinear pulse propagation in dispersion managed system", Physica D, Vol. 123, page 255 (1998) and S.K. Turitsyn, I. Gabitov, E.W. Laedke, V.K. Mezentsev, S.L. Musher, E.G. Shapiro, T. Schäfer, K.H. Spatschek, "Variational approach to optical pulse propagation in dispersion compensated transmission systems", Opt. Commun., Vol. 151, page 117 (1998).

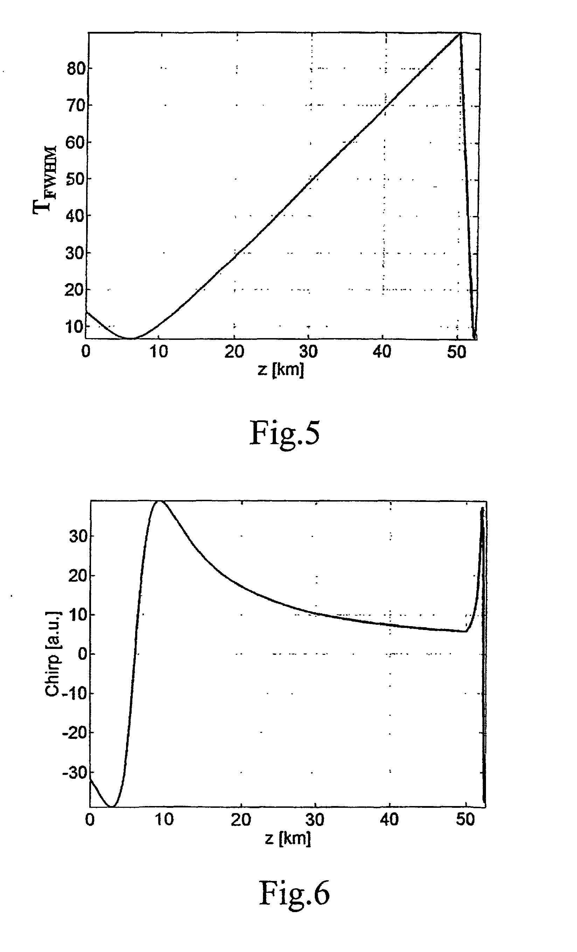

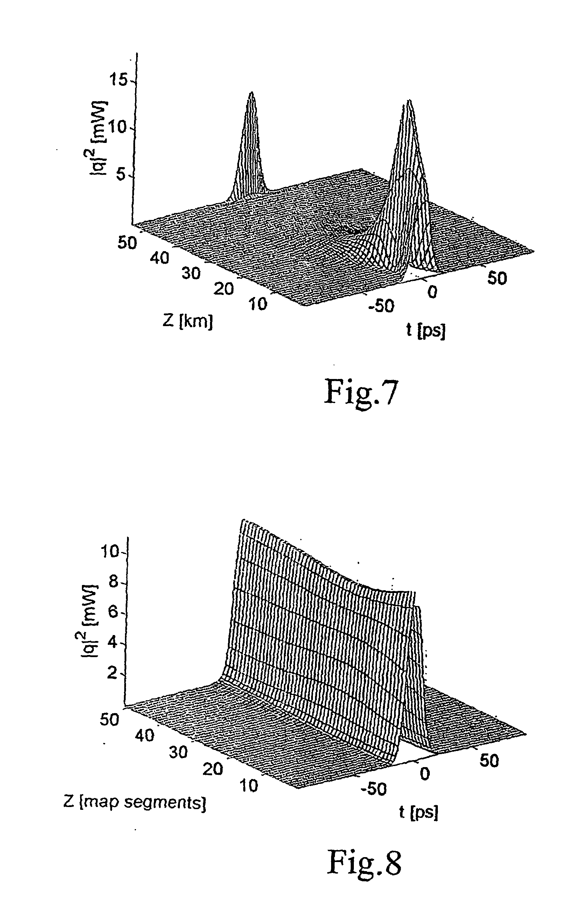

For example Figure 5 shows the evolution of the duration within a span comprising two segments of optical fibre whose characteristics are summarized in the following Table 1 for a pulse having a wavelength of 1550 nm launched with the following initial parameters: $T_{FWHM}$ = 14.09 ps, chirp C = -0.012 ps$^{-2}$ , peak power $P_0$ = 11.33 mW. Figure 6 shows the evolution of the chirp (in arbitrary units) over the same span. Figure 7 shows the evolution of the shape of the pulse over the same span, obtained by a numeric solution of the non-linear Schrödinger equation. As may be seen in Figure 7, the pulse does not keep the same shape within the span, due to the fact that its parameters do not remain constant. Contrary to this, Figure 8 shows the evolution of the shape of the pulse after fifty spans consisting of the same optical fibres obtained by sampling at the end of each span of the dispersion map. As can be seen, in this case the pulse profile remains substantially unchanged.

Table 1

| | $\gamma$ [1/ (W km) ] | D [ps/(km nm) ] | S [ps/km nm$^2$) ] | $\alpha$ [dB/km] | L [km] |
|---|---|---|---|---|---|
| Segmen t 1 | 1.5 | 3.9 | 0.08 | 0.25 | 50 |
| Segmen t 2 | 5.06 | -73.7 | 0.06 | 0.3 | 2.65 |

Key:

y:    non-linearity coefficient at 1550 nm
D:    dispersion at 1550 nm
S:    dispersion slope at 1550 nm
$\alpha$:    attenuation coefficient at 1550 nm

Typically, starting from the power of the transmitter or transmitters available, from the bit rate, from the distance between the amplifiers and from the characteristics of the dispersion map, the pulse parameters which have to be launched along an alternate dispersion optical path such as to guarantee that the pulses launched have a DM-soliton type dynamics can be calculated by methods known to those skilled in the art (for example by MVR). More particularly, the bit rate determines the maximum duration of the pulses. Given the transmitter power, the distance between amplifiers and the dispersion characteristics of the optical path (typically the behaviour of the average dispersion versus wavelength), the calculation allows to determine the parameters of the pulses which have to be launched, such as wavelength, duration, chirp and amplitude of the pulses which have to be launched on the optical path. Clearly the calculated duration must be less than or at most equal to the maximum duration defined by the system bit rate.

In order to be able to launch an optical WDM signal, or to be able to launch channels of the DM-soliton type at different wavelengths, the dependency of average dispersion on wavelength has to be taken into account, especially at high bit rates (> 10 Gbit/s). In fact, if the behaviour of the average dispersion versus wavelength is not perfectly flat, different channels "see" different average dispersions. These differences can result in a DM-soliton regime on an optical path being only compatible for optimized channels lying within a wavelength range which might even be very small, possibly a single channel. In practice, for non-optimized channels the DM-soliton dynamics is hindered by dispersion, which does not therefore permit transmission over long distances. In particular, channels affected by normal average dispersion ($D_{ave}$ < 0) have in practice proved to be very unstable, although their compatibility with dynamics of the DM-soliton type has been demonstrated theoretically.

The Applicant has found that this problem can be solved by modifying the wavelength of channels not optimized for a DM-soliton dynamics along the optical path. Let $\lambda_c$ be the wavelength of a channel optimized for DM-soliton transmission along optical path OL. Let $\lambda_1$ be the wavelength of a non-optimized channel launched along the first portion of optical path 4. The modification of the wavelength of the non-optimized channel is carried out by the conversion device 6 so that a channel having a modified wavelength $\lambda_2$ such that $\lambda_2$ is on the opposite side from $\lambda_1$ with respect to $\lambda_c$ propagates along the second portion of optical path 5. Preferably this modification is carried out in such a way that ($\lambda_1 + \lambda_2$)/2 is substantially equal to $\lambda_c$, that is in such a way that $\lambda_1$ and $\lambda_2$ are symmetrical with respect to $\lambda_c$. Modification of the wavelength according to the abovementioned criterion can be carried out several times along the transmission system, depending on many factors. For example, the longer- -the transmission system, the greater may be the number of wavelength conversions. Also, if the average dispersion is strongly dependent on wavelength a higher number of wavelength conversions may be provided. Preferably, the dispersion map may be designed in such a way that the slope of the average dispersion is less than 0.08 ps/(nm$^2$ km), even more preferably 0.02 ps/(nm$^2$ km) in the transmission band, in order to limit the number of conversion devices. According to the Applicant, modification of the wavelength of a non-optimized channel as above, which may be performed several times along the optical path, succeeds in solving the abovementioned problem in that the channel on average propagates along an optical path having an "averaged dispersion map" which is close to if not identical with an ideal dispersion map for that channel. The method is also advantageously applicable in the case where several non-optimized channels are launched in order to create a DM-soliton WDM system. In particular, the method according to the invention makes it possible to send pulses at different wavelengths from transmission station 2 with substantially the same launch parameters. In practice it is possible to calculate the launch parameters of the pulses for all the channels with reference to a single optimized channel without the need therefore for an ad hoc recalculation of the parameters for each channel. This represents an appreciable advantage in design of the system.

The method described above appears to be particularly advantageous for launching channels affected by normal average dispersion along the first portion of optical path 4, maintaining a stable soliton dynamics during propagation.

The modification of the wavelength of the non-optimized channels is carried out by the conversion device 6. As mentioned, this device may be a phase conjugation device. The Applicant has verified that such a device can be advantageous in a DM-soliton transmission system because it makes it possible to reduce the jitter due to collisions between solitons which are close to each other. The Applicant has however observed that spectral inversion, performed about the central frequency of the modified channel and induced by the phase conjugation device, affects one of the most important parameters of the pulse being propagated, that is the chirp C, by changing the sign thereof. The Applicant has found that if the position of the phase conjugation device along the optical path is not duly chosen, the spectral inversion induced by a phase conjugation device can introduce distortions in the pulses such as to compromise the DM-soliton dynamics because of the change of sign of the chirp. The Applicant has found that this problem can be solved by locating the phase conjugation device in portions of the optical path in which the chirp of the pulses optimized for propagation of the DM-soliton type is substantially zero. In the literature, zero chirp pulses are also known as "transform-limited pulses". A portion of the optical path in which the chirp of the optimized pulses is substantially cancelled out will be indicated below as a "chirp cancellation portion". This can be determined by, for example, the MVR method. The Applicant has verified that the points where the chirp of optimized channels is cancelled out are located far from the junction points of the optical fibres having dispersion of opposite sign in the spans of the dispersion map, that is they lie within the individual segments of optical fibre or at the junctions of optical fibres having dispersion of the same sign. More particularly, a chirp cancellation point can generally be found in portions of the optical path lying between two points at which the chirp has an at least partial minimum value and an at least partial maximum value respectively, of opposite sign, along the span. The Applicant has found that the length $L_0$ of such portions of optical path lying between the minimum and maximum chirp depends on the duration of the pulses and on the average dispersion of the segments of optical fibre immediately preceding and immediately following a zero chirp point in accordance with an approximate formula found by the Applicant:

$$L_0 = T_0^2/|GVD_1| + T_0^2/|GVD_2| \qquad [2]$$

where $T_0$ is meant as calculated at the zero chirp point and $GVD_1$ and $GVD_2$ are the dispersions (expressed as ps²/km) of the segments immediately upstream and downstream of the zero chirp point respectively.

The Applicant has found that this length $L_0$ can determine the tolerance margin within which the phase conjugation device can be positioned without introducing distortions into the pulses such as to destroy the soliton dynamics over a long distance. The value of $L_0$ found in this way can therefore define the substantially maximum length of the chirp cancellation portion within which the phase conjugation device should be positioned. More particularly, being $x_0$ the zero chirp point, the phase conjugation device can be located in an interval lying between $(x_0-T_0^2/|GVD_1|)$ and $(x_0 + T_0^2/|GVD_2|)$. Preferably the device may be located within an interval lying between $0.3(x_0 - T_0^2/|GVD_1|)$ and $0.3(x_0 + T_0^2/|GVD_2|)$.

Preferably the dispersion map may be designed in such a way that the chirp cancellation portions are positioned at the beginning and at the end of each span, in such a way that they are located at a line amplifier. This allows the exploitation of an interruption which is already present in the optical path, without introducing an additional interruption to insert the phase conjugation device. This can also be advantageously exploited in order to be able to amplify the pulses immediately before they enter the phase conjugation device.

For example, a map comprising spans having two segments of optical fibre may be redesigned through an iterative calculation method, transferring a portion of the first optical fibre to the final portion of the span (or a portion of the second optical fibre to the initial part) at each iteration, and recalculating the evolution of the chirp on the new span at constant pulse energy, for example by the MVR method, in order to minimize the absolute value of the chirp at the beginning (and end) of the span.

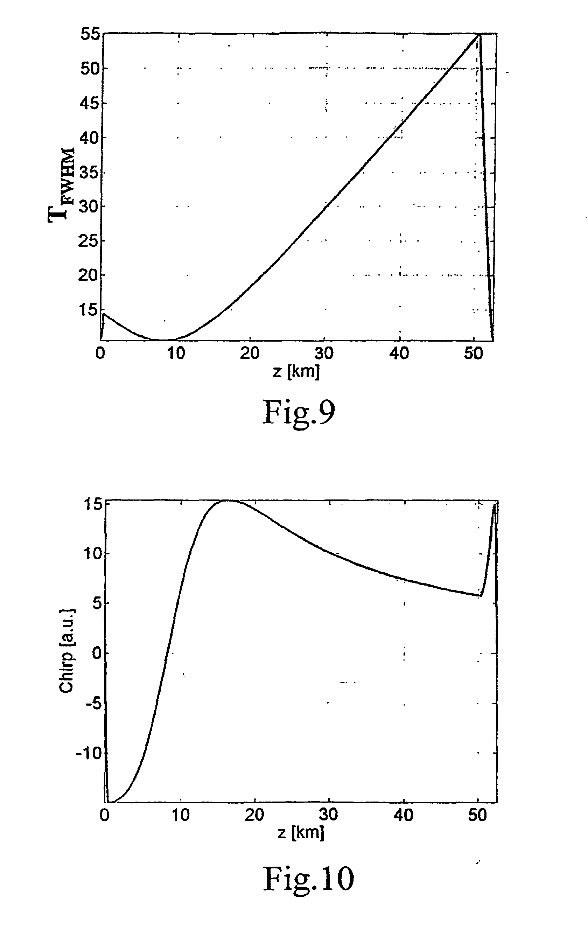

The requirement that at least one chirp cancellation portion should be located at the beginning of each span may result in a dispersion map which comprises spans having more than only two segments of optical fibre having dispersion of alternate sign. For example, the two-segment dispersion map comprising optical fibres having the characteristics shown in Table 1 does not satisfy the condition of zero chirp at the beginning of the span, as may be seen from Figure 6. Instead, a map comprising spans formed from a first segment of 0.43 km of negative dispersion fibre (indicated as "Segment 2" in Table 1), followed by a 50 km segment of positive dispersion fibre (indicated as "Segment 1 in Table 1), in turn followed by a second 2.22 km segment of negative dispersion fibre satisfies the condition of substantially zero chirp at the beginning of the span. Figures 9 and 10 show the evolution of the duration and of the chirp in the span modified in this way (similar Figures 5 and 6 should be compared for the two-segment span according to Table 1).

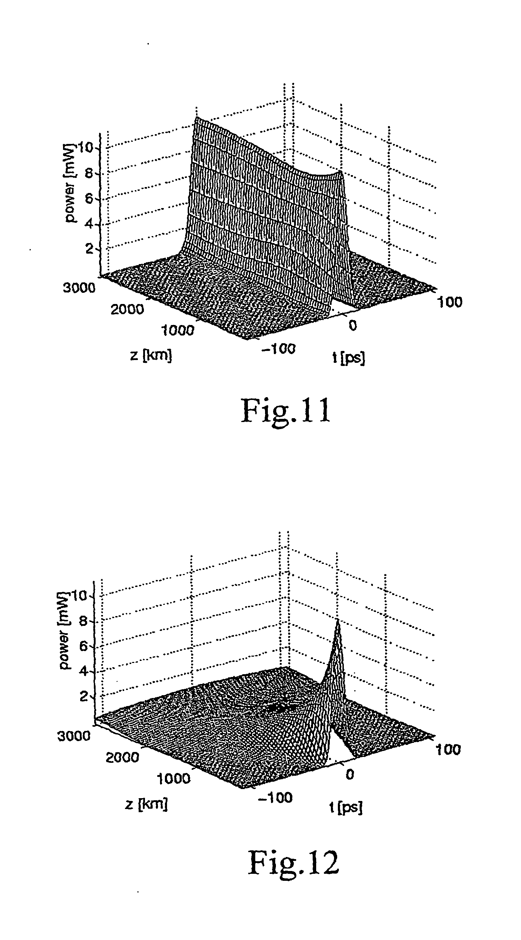

Figure 11 for example shows the evolution of a pulse at 1550 nm along 3000 km of optical path formed by the concatenation of two-segment spans as described in Table 1 in the absence of a wavelength conversion device. The figure has been obtained by sampling the pulse shape at the beginning of each span. The dynamics of the DM-soliton type, which indicates that this channel has optimized parameters for the dispersion characteristics of the optical path mentioned above, can be noted.

Figure 12 on the other hand shows the evolution of a pulse having a wavelength of 1550.8 nm (+0.8 nm in comparison with the previous case) along the same optical path in the absence of a wavelength conversion device. In the simulation the same pulse parameters (peak power, duration, etc.) as in the previous case were retained. As can be seen, in this case the soliton dynamics is completely destroyed in the course of propagation. Similar behaviour would occur for a channel having a wavelength displaced by -0.8 nm with respect to that of the pulse in Figure 11.

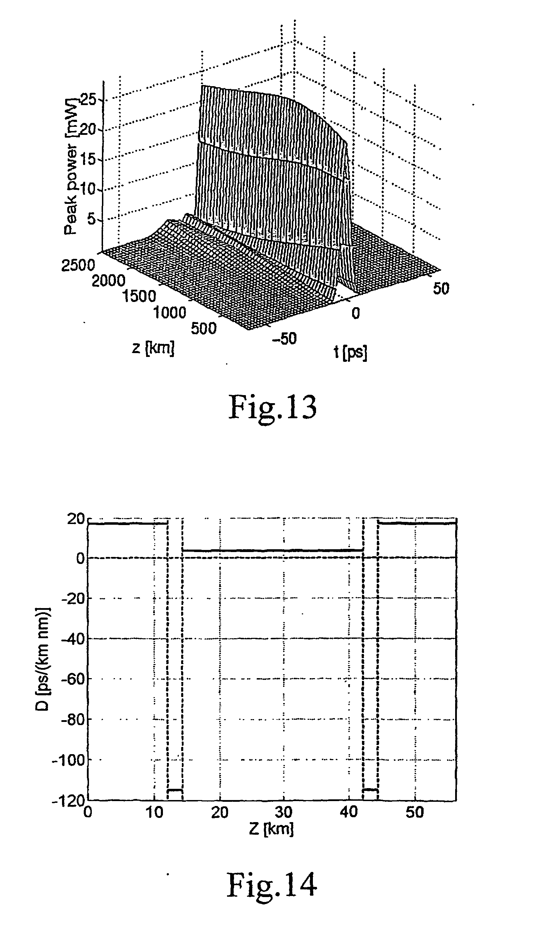

Figure 13 on the other hand shows the evolution of a pulse having the same energy and the same initial wavelength of the pulse of Figure 12 over 2500 km, that propagates along the map redesigned in such a way as to obtain the zero chirp point at the beginning of each span and that at each span is subjected to wavelength conversion. This conversion takes place in such a way as to cause a channel of wavelength 1549.2 nm to propagate after a first conversion, a channel having a wavelength of 1550.8 nm after a second conversion, and so on. As can be seen from Figure 13, the pulse retains its main constituent parameters (amplitude, duration) for 2500 km, in the presence of acceptable distortion, at least for the first 1500-2000 km. By comparing Figure 12 with Figure 13 it can be concluded that periodical wavelength conversion in accordance with an embodiment of the invention makes it possible to recover a dynamics of the DM-soliton type for at least one channel.

The dispersion map described with reference to the example in Figure 13 has three segments. Better propagation may be obtained by further fragmenting each span, for example by making up the map with spans having six segments formed from the same optical fibres, maintaining the alternation between optical fibre having positive and negative dispersion. The Applicant has verified that greater fragmentation of the spans makes it possible to reduce the jitter due to soliton collisions and interactions.

Further, even better results can be obtained by reducing the slope of the average dispersion in the spans. In the example of the three segment map described above, the slope of the average dispersion was in fact 0.079 ps/(nm$^2$ km). Figure 14 shows a span of a preferred example of a dispersion map formed by optical fibres having characteristics as shown in Table 2.

Table 2

|  | D [ps/km/nm] | S [ps/km/nm$^2$] | $\alpha$ [dB/km] | $A_{eff}$ [um$^2$] | L [km] |
|---|---|---|---|---|---|
| Segment 1 | 17.2 | 0.062 | 0.2 | 80 | 10 |
| Segment 2 | -117.5 | -0.78 | 0.6 | 20 | 2.2 |
| Segment 3 | 3.8 | 0.085 | 0.25 | 50 | 28 |
| Segment 4 | -117.5 | -0.78 | 0.6 | 20 | 2.2 |
| Segment 5 | 17.2 | 0.062 | 0.2 | 80 | 14 |

Key:

D: dispersion at 1550 nm
S: dispersion slope at 1550 nm
$\alpha$: attenuation coefficient at 1550 nm
$A_{eff}$: effective area at 1550 nm

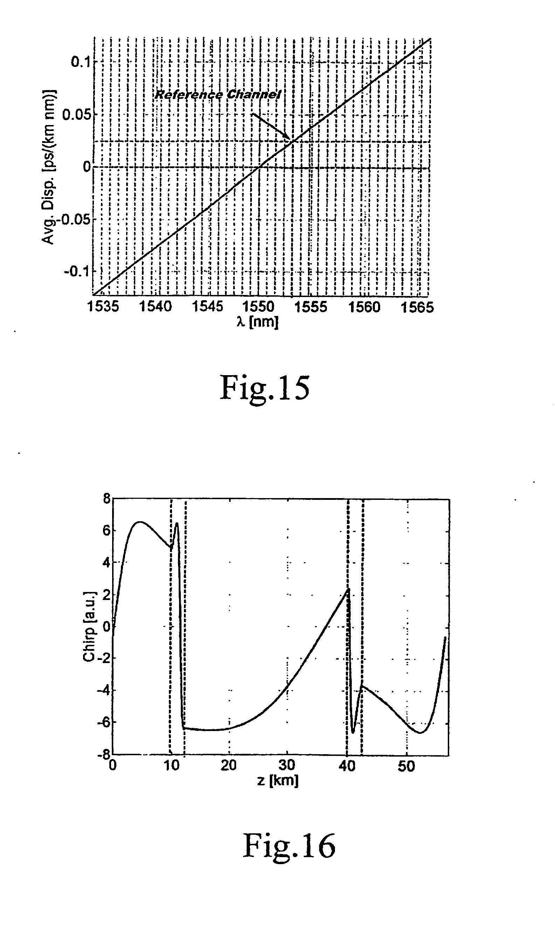

Figure 15 shows the behaviour of the average dispersion with respect to wavelength. As may be obtained, the slope of the average dispersion is approximately 0.008 ps/(nm$^2$ km). Figure 16 shows the evolution of the chirp calculated by the reduced variational method along a span of optical path having a dispersion map as in Figure 14 for a pulse adapted to the transmission of DM solitons on such an optical path having a wavelength of 1553.2 nm, corresponding to an average dispersion of +0.025 ps/(nm km), launched at 20 Gbit/s with an average power of -0.96 dBm and a duration of 16 ps. As can be seen, the map is designed in such a way that the pulse has a chirp of substantially zero at the beginning of the span.

The Applicant has performed a series of simulations of launch of channels at different wavelengths on an optical path made by several spans comprising optical fibres arranged in accordance with the map in Figure 14, with the same power and duration parameters as indicated above. In the simulations the penalty level at different transmission distances was calculated for propagation without wavelength conversion and with wavelength conversion. In the simulations with wavelength conversion, several converters were provided, located ten spans apart with each other in chirp cancellation portions.

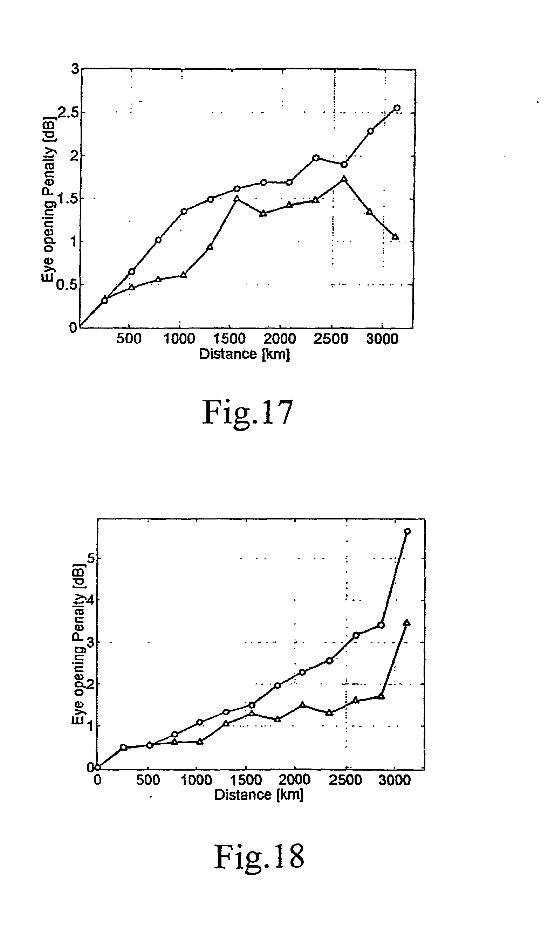

Figure 17 shows the penalty level versus transmission distance for a channel at 1552.4 nm (corresponding to a positive average dispersion which is lower than that of the optimum channel at 1553.2 nm, as can be obtained from Figure 15) without wavelength conversion (circles) and with wavelength conversion (triangles). In the simulations with wavelength conversion the channel wavelength was varied alternately between values of 1552.4 and 1554 nm. As can be seen from Figure 17, the penalty level remains almost always lower in the case with wavelength conversion.

Figure 18 shows the penalty level versus transmission distance for a channel at 1549.2 nm (corresponding to a negative average dispersion, as can be seen in Figure 15), without wavelength conversion (circles) and with wavelength conversion (triangles). In the simulations with wavelength conversion the channel wavelength was varied alternately between values of 1549.2 and 1557.2 nm. As may be seen from Figure 18 the penalty level remains almost always lower in the case with wavelength conversion, and becomes significantly better in particular for long transmission distances, in excess of 1500 km.

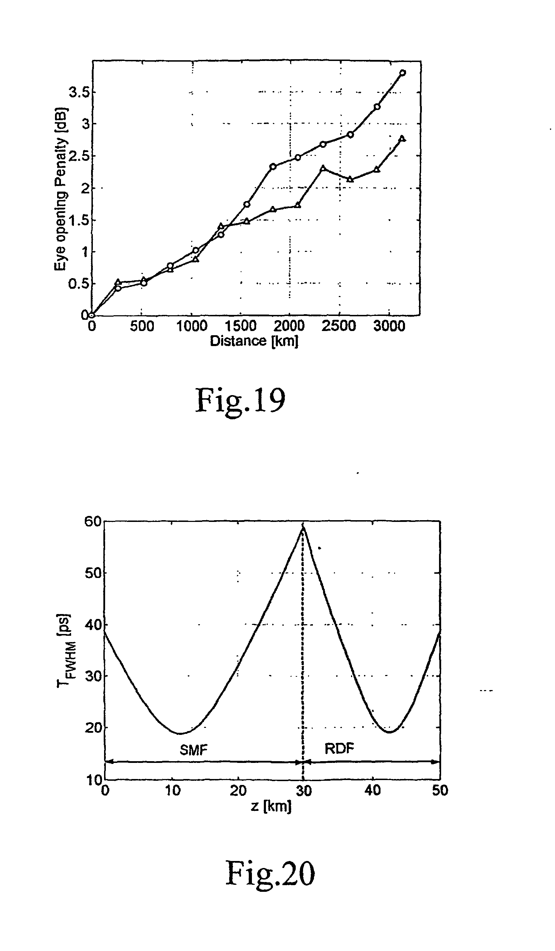

Figure 19 shows the penalty level versus transmission distance for a channel at 1548.4 nm (corresponding to a negative average dispersion, as may be seen in Figure 15) without wavelength conversion (circles) and with wavelength conversion (triangles). In the simulations with wavelength conversion the channel wavelength was varied alternately between values of 1548.4 and 1558 nm. As can be seen from Figure 19, the penalty level remains significantly lower in the case of wavelength conversion for distances in excess of 1500 km.

In another set of simulations the Applicant evaluated the performance of a transmission system having spans designed in accordance with the indications provided by Nakazawa et al., in the previously cited article, in which a phase conjugation device was however added after approximately 1500 km. The simulations were performed for a single channel, positioning the phase conjugation device at the chirp cancellation point for the pulses launched and also at nearby points in order to evaluate the margin of tolerance for the positioning of the phase conjugation device around the precise chirp cancellation point.

As stated by Nakazawa et al., the system was designed for a transmission capacity of 25 channels at 40 Gbit/s. Each channel transmits at 20 Gbit/s and reaches 40 Gbit/s with polarization multiplexing. The experimental system has an eye-opening penalty of 2 dB after 1500 km of transmission. The authors state that the amplifier spacing is 50 km, of which 30 km consist of standard SMF fibre and 20 km consist of dispersion compensating RDF fibre having a reversed dispersion slope. According to the authors, the average dispersion is approximately 0.02 ps/(nm km) and the slope of the average dispersion is less than 0.005 ps/(nm$^2$ km). From the fact that the average dispersion is approximately 0.02 ps/km/nm and assuming that the SMF dispersion is equal to 16 ps/km/nm, it has been found that the RDF dispersion is -23.95 ps/(nm km). An effective area of 30 $\mu$m$^2$ is assumed for the RDF. The authors also indicate that overall losses are 12 dB; the SMF losses are assumed to be equal to 0.2 dB/km while therefore the RDF losses are assumed to be equal to 0.3 dB/km. The authors also indicate an average transmitted power of +16 dBm, or 39.8 mW. This power must be divided over the 25 -channels and for the two polarizations of each channel. Each polarization therefore has 0.796 mW or-0.99 dBm. In what follows a single polarization of a single channel at 1550 nm will be considered for an overall bit rate of 20 Gbit/s. A noise factor of 4.5 dB is set for each amplifier.

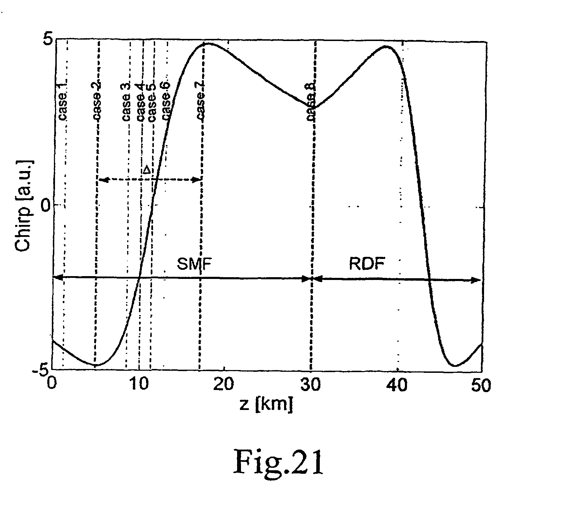

Figure 20 and Figure 21 respectively show the evolutions of the duration and of the chirp along a single span for a pulse having a DM-soliton type dynamics during propagation, determined by the MVR method.

The performances of the system were evaluated by positioning the phase conjugation device at different points along thespan located at approximately 1500 km from the pulse launch. The locations at which the phase conjugation device was positioned along the span are indicated in Figure 21 with the notations from "case 1" to "case 8" shown in Table 3 below.

Table 3

| Case 1 | 1 km |
|--------|---------|
| Case 2 | 5 km |
| Case 3 | 8 km |
| Case 4 | 10 km |
| Case 5 | 11.3 km |
| Case 6 | 12.5 km |
| Case 7 | 17 km |
| Case 8 | 29.9 km |

As can be seen from Figure 21, case 5 corresponds to a point at which chirp is substantially cancelled. The launched channel is subjected to wavelength conversion by the phase conjugation device, but this effect was not considered in the simulations because of the very low wavelength dependency of the average dispersion. The effect of distortion introduced by the spectral inversion induced by the phase conjugation device was therefore evaluated. The penalty was calculated for 25 transmissions of a 64 bit PRBS word.

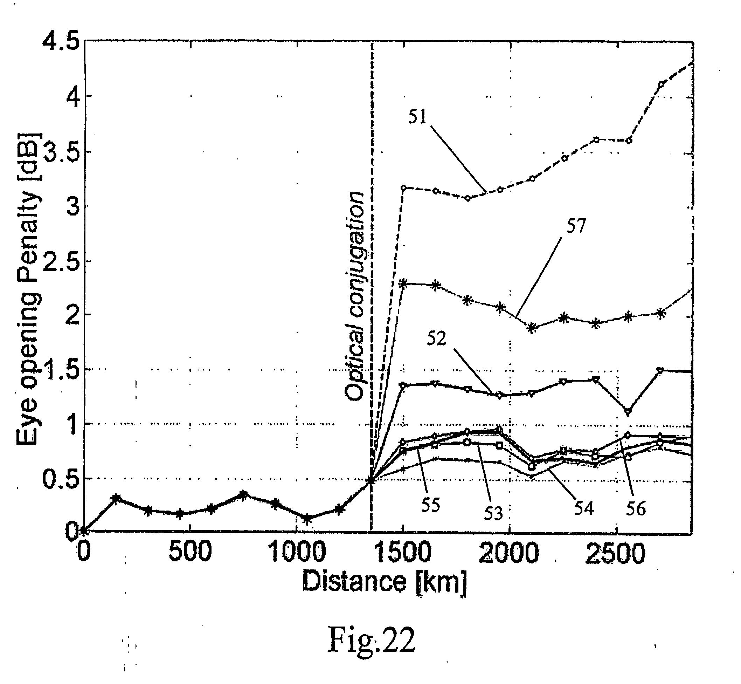

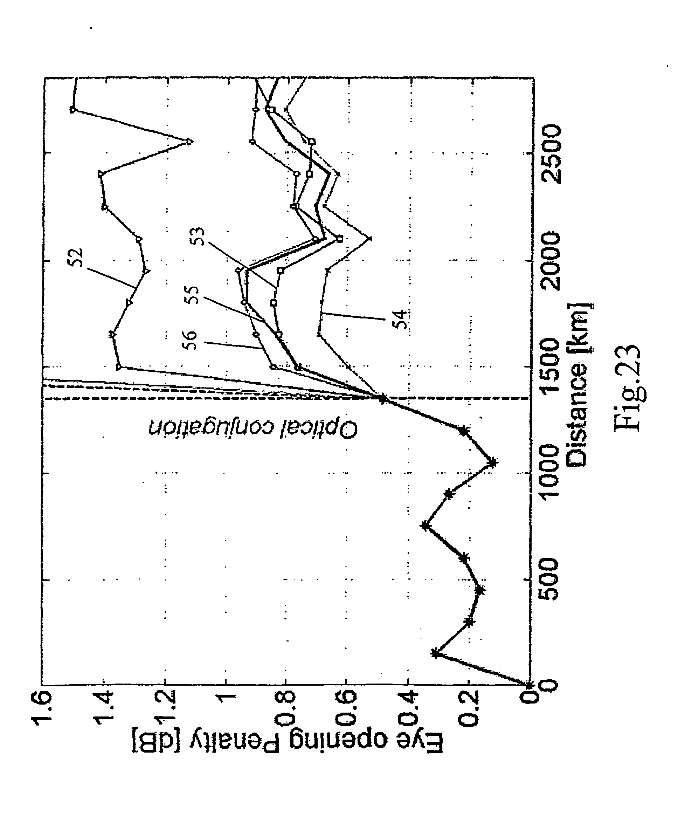

The results are shown in Figures 22 and 23, which show the behaviour of the penalty versus the transmission distance for case 1 (line 51), 2 (line 52), 3 (line 53), 4 (line 54), 5 (line 55), 6 (line 56), 7 (line 57). Figure 23 shows the same graph shown in Figure 22 on a smaller penalty scale. Case 8 was not reported in Figures 22-23 because the resulting penalty downstream of the phase conjugation device was greater than 10 dB, that is a wholly unacceptable result. Propagation was identical in all seven cases in the length between 0 and 1500 km as there was no phase conjugation device there. Downstream of the phase conjugation device propagation depends on the level of distortion introduced by spectral inversion. It can be seen from Figure 22 that in cases from 2 to 7 an acceptable penalty level (less than 2.5 dB) can be obtained at least up to a transmission distance of 3000 km. Cases from 2 to 7 correspond to an interval of approximately 12 km around the chirp cancellation point. This value is in good agreement with that which can be calculated using formula [2]: in fact, SMF fibre has a GVD of approximately -20 ps$^2$/km, $T_{FWHM}$ at the zero chirp point is approximately 18.8 ps (see Figure 20), from which it can be obtained that $T_0$ is approximately 11.3 ps. A value of $L_0$ equal to approximately 12.7 km is therefore obtained from formula [2].

It can be seen in Figure 23 how a better propagation, corresponding to less distortion of the pulse introduced by spectral inversion, can be obtained by positioning the phase conjugation device as close as possible to the chirp cancellation point (cases from 3 to 6).

### Claims

1. Method of transmitting optical pulses along an optical path (OL) comprising optical fibres having dispersion of alternating sign arranged in accordance with a dispersion map suitable for the transmission of quasi solitons at a wavelength $\lambda_c$, the said method comprising the steps of:

   - launching at least a first optical pulse RZ having a first wavelength $\lambda_1$ which is different from $\lambda_c$ on a first portion (4) of said optical path,
   - at the end of the said first portion of said optical path, modifying the wavelength of at least said first pulse in such a way as to obtain a second optical pulse RZ having a second wavelength $\lambda_2$, such that $\lambda_2$ is on the opposite side from $\lambda_1$ with respect to $\lambda_c$,
   - launching said second pulse on a second portion (5) of said optical path.

2. Method according to Claim 1, wherein said step of modifying the wavelength is carried out in such a way that $(\lambda_1 + \lambda_2)/2$ is substantially equal to $\lambda_c$.

3. Method according to Claims 1 or 2, wherein said step of modifying the wavelength comprises the step of inverting the spectrum of the said first optical pulse RZ.

4. Method according to Claim 3, wherein said step of inverting the spectrum is performed in a chirp cancellation portion along the said optical path.

5. Method according to any one of the foregoing claims, further comprising the step of amplifying said first optical pulse before the step of modifying the wavelength of said first optical pulse.

6. Optical transmission system comprising: optical fibres having dispersion of alternating sign arranged in an optical path (OL) in accordance with a dispersion map suitable for the transmission of quasi-solitons at a wavelength $\lambda_c$; a transmission station (2) and a receiver station (3) connected to respective ends of said optical path, said transmission station being capable of launching on said optical path at least a first optical pulse RZ at a wavelength $\lambda_1$ which is different from $\lambda_c$; and at least one wavelength conversion device (6), located along said optical path, capable of modifying the wavelength of at least said first pulse having a wavelength $\lambda_1$ in such a way as to obtain a second pulse having a wavelength $\lambda_2$, such that $\lambda_2$ is on the opposite side to $\lambda_1$ with respect to $\lambda_c$.

7. Transmission system according to Claim 6, wherein said second wavelength $\lambda_2$ is such that $(\lambda_1 + \lambda_2)/2$ is substantially equal to $\lambda_c$.

8. Transmission system according to Claim 6 or 7, wherein said conversion device is a phase conjugation device.

9. Transmission system according to Claim 8, wherein said phase conjugation device is located along the said optical path in a chirp cancellation portion.

10. Transmission system according to any one of Claims 6 to 9, wherein said optical path comprises at least one amplifier.

11. Transmission system according to Claim 10, wherein said conversion device is located at an amplifier.

12. Transmission system according to any one of Claims 6 to 11, wherein said optical fibres having dispersion of alternate sign have a dispersion which is greater than or equal to 1 ps/(nm km) in absolute value.

13. Transmission system according to any one of Claims 6 to 12, wherein said dispersion map comprises spans having at least three segments of optical fibre.

14. Transmission system according to any one of Claims 6 to 13, wherein said optical path has a slope of the average dispersion of less than 0.08 ps/(nm$^2$ km).

15. Transmission system according to any one of Claims 6 to 13, wherein said first pulse has a normal average dispersion in the said first portion of optical path.

**Patentansprüche**

1. Verfahren zum Übermitteln optischer Pulse entlang eines optischen Pfades (OL) mit Glasfaserleitern mit Dispersion von wechselndem Vorzeichen und angeordnet gemäß eines Dispersionskennfeldes, geeignet für die Übermittlung von Quasi-Solitonen bei einer Wellenlänge $\lambda_c$, wobei das Verfahren die Schritte umfasst:

   Starten mindestens eines ersten optischen Pulses RZ mit einer ersten Wellenlänge $\lambda_1$, die unterschiedlich von $\lambda_c$ auf einem ersten Teil (4) des optischen Pfades ist,

   Modifizieren der Wellenlänge des mindestens ersten Pulses bei dem Ende des ersten Teils des optischen Pfades so, dass ein zweiter optischer Puls RZ mit einer zweiten Wellenlänge $\lambda_2$ erhalten wird, und dass $\lambda_2$ auf der entgegengesetzten Seite von $\lambda_1$ bezüglich $\lambda_c$ ist,

   Starten des zweiten Pulses auf einem zweiten Teil (5) des optischen Pfades.

2. Verfahren gemäß Anspruch 1, wobei der Schritt des Modifizierens der Wellenlänge derart ausgeführt wird, dass $(\lambda_1+\lambda_2)/2$ im wesentlichen gleich $\lambda_c$ ist.

3. Verfahren gemäß den Ansprüchen 1 oder 2, wobei der Schritt des Modifizierens der Wellenlänge den Schritt des Invertierens des Spektrums des ersten optischen Pulses RZ umfasst.

4. Verfahren gemäß Anspruch 3, wobei der Schritt des Invertierens des Spektrums in einem Chirp-Aufhebungsteil entlang des optischen Pfades durchgeführt wird.

5. Verfahren gemäß einem der vorangegangen Ansprüche, ferner den Schritt des Verstärkens des ersten optischen Pulses vor dem Schritt des Modifizierens der Wellenlänge des ersten optischen Pulses umfassend.

6. Optisches Übermittlungssystem umfassend:

   Glasfaserleitern mit Dispersion von wechselndem Vorzeichen und angeordnet in einem optischen Pfad (OL) gemäß einem Dispersionskennfeld, geeignet für die Übermittlung von Quasi-Solitonen bei einer Wellenlänge $\lambda_c$;

   eine Übermittlungsstation (2) und eine Empfängerstation (3), die an die jeweiligen Enden des optischen Pfades angeschlossen sind, wobei die Übermittlungsstation zum Starten mindestens eines ersten optischen Pulses

EP 1 436 920 B1

RZ bei einer Wellenlänge $\lambda_1$, die unterschiedlich von $\lambda_c$ ist, auf dem optischen Pfad fähig ist; und

mindestens eines entlang des optischen Pfades untergebrachten Wellenlängenkonvertierungsgerätes (6), das zum Modifizieren der Wellenlänge mindestens des ersten Pulses mit einer Wellenlänge $\lambda_1$ fähig ist, so dass ein zweiter Puls mit einer Wellenlänge $\lambda_2$ erhalten wird, und dass $\lambda_2$ auf der entgegengesetzten Seite von $\lambda_1$ bezüglich $\lambda_c$ ist.

7.  Übermittlungssystem gemäß Anspruch 6, wobei die zweite Wellenlänge $\lambda_2$ derart ist, dass $(\lambda_1+\lambda_2)/2$ im wesentlichen gleich $\lambda_c$ ist.

8.  Übermittlungssystem gemäß Anspruch 6 oder 7, wobei das Konvertierungsgerät ein Phasenkonjugationsgerät ist.

9.  Übermittlungssystem gemäß Anspruch 8, wobei das Phasenkonjugationsgerät entlang des optischen Pfades in einem Chirp-Aufhebungsteil untergebracht ist.

10. Übermittlungssystem gemäß einem der Ansprüche 6 bis 9, wobei der optische Pfad mindestens einen Verstärker umfasst.

11. Übermittlungssystem gemäß dem Anspruch 10, wobei das Konvertierungsgerät bei einem Verstärker untergebracht ist.

12. Übermittlungssystem gemäß einem der Ansprüche 6 bis 11, wobei die Glasfaserleiter mit der Dispersion von wechselndem Vorzeichen eine Dispersion haben, die größer oder gleich 1 ps/(nm km) im absoluten Wert ist.

13. Übermittlungssystem gemäß einem der Ansprüche 6 bis 12, wobei das Dispersionserkennfeld Bereiche mit mindestens 3 Glasfaserleitersegmenten umfasst.

14. Übermittlungssystem gemäß einem der Ansprüche 6 bis 13, wobei der optische Pfad eine Steigung der durchschnittlichen Dispersion von weniger als 0.08 ps/(nm$^2$ km) hat.

15. Übermittlungssystem gemäß einem der Ansprüche 6 bis 13, wobei der erste Puls eine normale durchschnittliche Dispersion in dem ersten Teil des optischen Pfades hat.

**Revendications**

1.  Procédé de transmission d'impulsions optiques le long d'un chemin optique (OL) comprenant des fibres optiques présentant une dispersion de signe alterné agencées selon une carte de dispersion adaptée à la transmission de quasi-solitons à une longueur d'onde $\lambda_c$, ledit procédé comprenant les étapes consistant à :

    -   émettre au moins une première impulsion optique RZ ayant une première longueur d'onde $\lambda_1$ qui est différente de $\lambda_c$ sur une première partie (4) dudit chemin optique,
    -   à la fin de ladite première partie dudit chemin optique, modifier la longueur d'onde d'au moins ladite première impulsion de manière à obtenir une deuxième impulsion optique RZ ayant une deuxième longueur d'onde $\lambda_2$ telle que $\lambda_2$ est du côté opposé à $\lambda_1$ par rapport à $\lambda_c$,
    -   émettre ladite deuxième impulsion sur une deuxième partie (5) dudit chemin optique.

2.  Procédé selon la revendication 1, dans lequel ladite étape de modification de la longueur d'onde est exécutée de manière telle que $(\lambda_1 + \lambda_2)/2$ est sensiblement égal à $\lambda_c$.

3.  Procédé selon la revendication 1 ou 2, dans lequel ladite étape de modification de la longueur d'onde comprend l'étape consistant à inverser le spectre de ladite première impulsion optique RZ.

4.  Procédé selon la revendication 3, dans lequel ladite étape d'inversion du spectre est exécutée dans une partie d'annulation de fluctuation de fréquence le long dudit chemin optique.

5.  Procédé selon l'une quelconque des revendications précédentes, comprenant en outre l'étape consistant à amplifier ladite première impulsion optique avant l'étape de modification de la longueur d'onde de ladite première impulsion optique.

6. Système de transmission optique comprenant :

des fibres optiques présentant une dispersion de signe alterné agencées dans un chemin optique (OL) selon une carte de dispersion adaptée à la transmission de quasi-solitons à une longueur d'onde $\lambda_c$ ;
une station d'émission (2) et une station réceptrice (3) connectées aux extrémités respectives dudit chemin optique, ladite station d'émission étant capable d'émettre sur ledit chemin optique au moins une première impulsion optique RZ ayant une longueur d'onde $\lambda_1$ qui est différente de $\lambda_c$ ; et
au moins un dispositif de conversion de longueur d'onde (6), situé le long dudit chemin optique, capable de modifier la longueur d'onde d'au moins ladite première impulsion ayant une longueur d'onde $\lambda_1$ de manière à obtenir une deuxième impulsion ayant une longueur d'onde $\lambda_2$ telle que $\lambda_2$ est du côté opposé à $\lambda_1$ par rapport à $\lambda_c$.

7. Système de transmission selon la revendication 6, dans lequel ladite deuxième longueur d'onde $\lambda_2$ est telle que $(\lambda_1 + \lambda_2)/2$ est sensiblement égal à $\lambda_c$.

8. Système de transmission selon la revendication 6 ou 7, dans lequel ledit dispositif de conversion est un dispositif de conjugaison de phase.

9. Système de transmission selon la revendication 8, dans lequel ledit dispositif de conjugaison de phase est situé le long dudit chemin optique dans une partie d'annulation de fluctuation de fréquence.

10. Système de transmission selon l'une quelconque des revendications 6 à 9, dans lequel ledit chemin optique comprend au moins un amplificateur.

11. Système de transmission selon la revendication 10, dans lequel ledit dispositif de conversion est situé au niveau d'un amplificateur.

12. Système de transmission selon l'une quelconque des revendications 6 à 11, dans lequel lesdites fibres optiques ayant une dispersion de signe alterné ont une dispersion qui est supérieure ou égale à 1 ps/(nm·km) en valeur absolue.

13. Système de transmission selon l'une quelconque des revendications 6 à 12, dans lequel ladite carte de dispersion comprend des intervalles comportant au moins trois segments de fibre optique.

14. Système de transmission selon l'une quelconque des revendications 6 à 13, dans lequel ledit chemin optique présente une pente de la dispersion moyenne inférieure à 0,08 ps/(nm$^2$·km).

15. Système de transmission selon l'une quelconque des revendications 6 à 13, dans lequel ladite première impulsion optique a une dispersion moyenne normale dans ladite première partie du chemin optique.

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

Fig.16

Fig.17

Fig.18

Fig.19

Fig.20

Fig.21

Fig.22

Fig.23

EP 1 436 920 B1